**Europäisches Patentamt**

**European Patent Office**

**Office européen des brevets**

(11) Veröffentlichungsnummer: **0 249 079**
**B1**

(12) **EUROPÄISCHE PATENTSCHRIFT**

(45) Veröffentlichungstag der Patentschrift:
01.08.90

(51) Int. Cl.⁵: **B23K 37/04**

(21) Anmeldenummer: 87107595.8

(22) Anmeldetag: 25.05.87

(54) Vorrichtung zum Zentrieren und Spannen von miteinander zu verschweissenden Rohrwerkstücken.

(30) Priorität: 10.06.86 DE 8615617 U
28.08.86 DE 8623042 U

(43) Veröffentlichungstag der Anmeldung:
16.12.87 Patentblatt 87/51

(45) Bekanntmachung des Hinweises auf die Patenterteilung:
01.08.90 Patentblatt 90/31

(84) Benannte Vertragsstaaten:
AT BE CH DE ES FR GB GR IT LI LU NL SE

(56) Entgegenhaltungen:
WO-A-86/05430

(73) Patentinhaber: Tesch, Klaus, Dorotheenstrasse 93,
D-2000 Hamburg 60(DE)

(72) Erfinder: Tesch, Klaus, Dorotheenstrasse 93,
D-2000 Hamburg 60(DE)

(74) Vertreter: Glawe, Delfs, Moll & Partner Patentanwälte,
Postfach 26 01 62 Liebherrstrasse 20,
D-8000 München 26(DE)

**Beschreibung**

Die Erfindung bezieht sich auf eine Vorrichtung zum Zentrieren und Spannen von miteinander zu verschweißenden Rohrwerkstücken, die beiderseits eines mit Schutzgaszuführung ung versehenen Schweißbereichs Spanneinrichtungen aufweist, von denen die erste mindestens eine und die zweite mindestens zwei Spanngliederreihen umfaßt, die aus nach außen sich keilförmig öffnenden und je eine Spanngliederreihe enthaltenden Spann-Nuten bestehen, deren Nutwände von axial relativ zueinander bewegbaren Ringteilen gebildet sind, von denen die äußersten über eine Zugstange und einen Antriebskörper lösbar miteinander verbunden sind, durch den sie entgegen einem Federkraftspeicher einander näherbar und voneinander entfernbar sind, während ein erster innerer Ringteil sowie der Schweißbereich fest auf einem Haltekörper angeordnet sind und ein zweiter innerer Ringteil axial verschiebbar auf dem Haltekörper angeordnet ist.

Unter Rohrwerkstücken sind Rohrstücke, Krümmer, Flanschen sowie im weiteren Sinne sämtliche Werkstücke zu verstehen, die eine Bohrung aufweisen, innerhalb welcher sie mittels einer Spannvorrichtung zentriert und gespannt werden können. Spannvorrichtungen der obengenannten Art sind bekannt (DE-U 8 507 555; DE-U 8 525 952). Sie sind als langgestreckter Körper ausgebildet, der in die miteinander zu verschweißenden Rohrwerkstücke eingeführt wird. An der Schweißstelle weist er als sogenannten Schweißbereich eine Ringvertiefung auf, in der Schutzgaszuführungsöffnungen münden. Auf der einen Seite des Schweißbereichs befindet sich eine Spanneinheit mit zwei Spanneinrichtungen und auf der anderen Seite eine Spanneinheit mit nur einer Spanneinrichtung, wobei die Spanngliederreihen jeder Spanneinrichtung von ringförmigen Schraubenfedern gebildet sind. Für das Spannen von geraden Rohrabschnitten verwendet man eine Spanneinheit mit zwei hintereinander angeordneten Spanneinrichtungen, um eine fluchtgenaue Ausrichtung zu gewährleisten. Zum Spannen von Krümmern oder kurzen Rohrteilen wie Flanschen verwendet man die Spanneinheit mit nur einer Spanneinrichtung. Um allen Kombinationen gerecht werden zu können, sind mindestens drei Typen von Vorrichtungen erforderlich, nämlich eine Vorrichtung mit zwei jeweils aus zwei Spanneinrichtungen bestehenden Spanneinheiten zum Verschweißen von geraden Rohrstücken; eine Vorrichtung, in welcher eine Spanneinheit mit nur einer Spanneinrichtung unmittelbar benachbart dem freien Vorrichtungsende angeordnet ist, um Krümmer spannen zu können; und eine Vorrichtung, bei der die nur eine Spanneinrichtung aufweisende Spanneinheit fern dem freien Vorrichtungsende jenseits des Schweißbereichs zum Spannen eines Flanschs angeordnet ist, wobei ein Anschlag zur Positionierung und Ausrichtung des Flanschs vorgesehen ist. Da es sich um Präzisionsgeräte handelt, ist es sehr aufwendig, für jeden Nenndurchmesser mindestens drei verschiedene Vorrichtungen vorhalten zu müssen.

Die der Erfindung zugrundeliegende Aufgabe besteht daher darin, den Aufwand für die Vorrichtungen, die für die drei Hauptanwendungsfälle erforderlich sind, herabzusetzen.

Die erfindungsgemäße Lösung besteht darin, daß der Haltekörper aus zwei zur Bildung einer fluchtenden Führungsfläche miteinander verbindbaren Haltekörperteilen besteht, von denen der erste den Schweißbereich trägt, und dass ein dritter auf die Haltekörperteile axial verschiebbarer Ringteil sowie eine weitere Spanngliederreihe vorgesehen sind.

Die die Spanneinheiten bildenden Teile können umgesteckt werden. Es sind insgesamt vier Spanngliederreihen vorgesehen. Damit kann eine und dieselbe Vorrichtung in unterschiedlichem Montagezustand für sämtliche Anwendungsfälle verwendet werden. Der Arbeitsaufwand für das Umstecken ist vergleichsweise gering, weil sämtliche Antriebsorgane unverändert bleiben können. Es braucht lediglich ein Endverschluß der Vorrichtung gelöst und nach dem Umstecken der Teile wieder befestigt zu werden. Der gesamte Erstellungs- und Vorhaltungsaufwand wird dadurch auf etwa ein Drittel gesenkt.

In einem dritten Montagezustand sind beide Spanneinheiten zum Spannen von geraden Rohrstücken mit je zwei Spanngliederreihen ausgerüstet. Im ersten und zweiten Montagezustand weist die erste Spanneinheit eine Spanngliederreihe und die zweite Spanneinheit drei Spanngliederreihen auf.

Es kann zweckmäßig sein, außer den die Nutwände bildenden Ringteilen auch den Schweißbereich lösbar und umsteckbar auf dem Haltekörper anzuordnen, wobei dieser dann gewünschtenfalls fest mit dem Antriebskörper oder der Kolbenstange verbunden sein könnte. Da dies aber im Hinblick auf eine einfache Zuführung des Schutzgases zum Schweißbereich nachteilig sein würde, ist es im allgemeinen zweckmäßiger, den Schweißbereich – wie bekannt – fest auf dem Haltekörper anzuordnen und diesen insgesamt umsteckbar auszubilden.

Zwecks einfacher Zuführung des Schutzgases zu dem je nach Montagezustand an unterschiedlicher axialer Stelle liegenden Schweißbereich ist es zweckmäßig, daß der Haltekörper einen langgestreckten Schutzgaszuführungsraum einschließt, der einerseits mit dem Schweißbereich und andererseits mit einer Schutzgaszuführungsöffnung in der Kolbenstange in jeder Montagestellung in Verbindung steht.

Vorteilhaft ist es, wenn der Haltekörper aus zwei Haltekörperteilen besteht, von denen der erste den Schweißbereich trägt und den Gaszuführungsraum bildet, der mindestens etwa halb so lang ist wie der Abstand zwischen den äußersten Ringteilen, wobei die Gaszuführungsöffnung etwa in der Mitte zwischen diesen äußersten Ringteilen liegt, und daß der zweite Haltekörperteil wahlweise auf der einen oder anderen Seite des ersten Haltekörperteils montierbar ist. Auf diese Weise läßt sich der Schweißbereich sowohl an den beiden äußersten Enden (im ersten und zweiten Montagezustand) als auch in der Mitte (im dritten Montagezustand) anordnen. Die beiden Haltekörperteile können zur Bildung einer fluchtenden Führungsfläche in geeigneter Weise miteinander verbindbar sein, beispielsweise über geeignete Paßflächen oder eine Verschraubung; jedoch kann in vielen Fällen auf eine solche direkte Verbindung verzichtet werden, wenn sie beide gegenüber der Kolbenstange zentriert sind.

Der Federkraftspeicher, der die Ringteile nach der durch den Antrieb hervorgerufenen Spannbewegung wieder in die Lösestellung zurückführt, kann von einer oder mehreren auf der Kolbenstange sitzenden Federn gebildet sein. Damit auch diese beim Umstecken unverändert bleiben können, schließen zweckmäßigerweise die Haltekörperstirnflächen und die diesen gegenüberliegenden Flächen der mit dem Kolbenstangenende bzw. dem Antriebskörper verbundenen Teile einen in allen Montagezuständen gleich langen Federraum ein. Vorzugsweise wird jedoch der Kraftfederspeicher ausschließlich von in den Spanngliederreihen vorgesehenen oder die Spanngliederreihen bildenden Ringfedern gebildet. Auf die die Kolbenstange umgebenden Federn kann dann teilweise oder vollständig verzichtet werden, wodurch Aufbau und Benutzung vereinfacht werden.

Wie an sich bekannt, ist es zweckmäßig, die Federkraft einer Spanneinheit stärker als die der anderen zu gestalten, und zwar entweder durch zusätzliche innere Federn oder durch unterschiedliche Stärke der den Spanngliederreihen innewohnenden Federkraft. Dadurch wird bewirkt, daß in der Spanneinheit mit der schwächeren Federkraft, die der Spannantriebsbewegung den geringeren Widerstand entgegensetzt, die Spanngliederreihen vor denen der anderen Spanneinheit nach außen gegen die Innenfläche des zugehörigen Werkstücks gedrückt werden, so daß dieses vor dem anderen Werkstück fixiert wird. Dies erleichtert das gegenseitige Ausrichten.

Wenn der Federkraftspeicher ausschließlich von den Spanngliederreihen gebildet wird, werden vorzugsweise Ringfedern unterschiedlicher Federkonstante verwendet. Statt dessen wäre es auch möglich, die Spann-Nuten mit unterschiedlichem Keilwinkel auszustatten. Zweckmäßiger sind jedoch Spann-Nuten, die im wesentlichen gleich geformt sind.

Wenn insgesamt vier Spanngliederreihen vorgesehen sind, werden zweckmäßigerweise zwei schwächere und zwei stärkere Federn vorgesehen, wobei im ersten und zweiten Montagezustand die erste Spanneinheit mit einer stärkeren Feder und im dritten Montagezustand jede Spanneinheit mit je zwei gleichen Federn bestückt ist.

Für eine wirksame Kühlung der Vorrichtung und insbesondere der an den Schweißbereich angrenzenden Teile genügt es nach der Erfindung im allgemeinen, wenn lediglich die Kolbenstange durch geschlossene Kühlkanäle gekühlt wird, wobei die Kühlwirkung von der Kolbenstange zu den dem Schweißbereich benachbarten Teilen einerseits durch Wärmeleitung und Wärmestrahlung und andererseits konvektiv durch das Schutzgas transportiert wird.

Die Erfindung wird im folgenden näher unter Bezugnahme auf die Zeichnung erläutert, die ein vorteilhaftes Ausführungsbeispiel veranschaulicht. Darin zeigen drei Figuren einen Längsschnitt durch dieselbe Ausführungsform der Vorrichtung in unterschiedlichen Montagezuständen.

Der Antriebskörper (1) der Vorrichtung umfaßt einen Zylinder (2), der an seinem inneren Ende durch eine Wand (3) geschlossen ist. Er enthält einen Kolben (4), der fest mit einem Anschlußteil (5) und der Kolbenstange (6) verbunden ist. Der Anschlußteil (5) dient zum Anschluß von Versorgungsschläuchen insbesondere für Schutzgas, Kühlwasserzu- und -abfuhr sowie Druckgas zur Betätigung der Kolbenzylindereinrichtung. Das Schutzgas wird durch Leitung (7) zur Schutzgasaustrittsöffnung (8) geführt, während das Kühlwasser durch Leitung (9) bis nahe dem freien, geschlossenen Ende der Kolbenstange gelangt, um dann im freien Kolbenstangenquerschnitt zurückgeführt zu werden. Die Zylinderwand (3) enthält eine Kolbenstangendichtung (10).

Auf der Kolbenstange ist der erste Haltekörperteil bestehend aus zylindrischer Hülse (11) und Stirnscheiben (12) konzentrisch geführt. An ihn schließt sich der zweite Haltekörperteil, bestehend aus Hülse (13) und Scheibe (14) an. Die Außendurchmesser der Hülsen (11 u. 13) stimmen etwa überein mit dem Außendurchmesser eines Ansatzstücks (15) der Zylinderwand (3).

Fest mit der Hülse (11) verbunden ist ein den Schweißbereich bildender Ringteil (16), der – übereinstimmend mit der Hülse (11) – mehrfach für die Zufuhr von Schutzgas durchbohrt ist. Er wird flankiert von austauschbaren, fest an ihm abgestützten Ringteilen (17). Ferner sind hülsenförmige Ringteile (18) vorgesehen sowie ein am Antriebskörper auf dem Ansatzstück (15) zentrierter und abgestützter Ringteil (19). Am freien Ende der Kolbenstange (6) ist ein tellerartiger Ringteil (20) lösbar mittels eines leicht lösbaren Verschlusses (21) – beispielsweise einer Gewindemutter oder eines Durchsteckkeils – gesichert. Alle Ringteile haben einen Innendurchmesser, der geringfügig größer ist als der Außendurchmesser der Hülsen (11, 13) und des Ansatzstücks (15). Sie wenden einander Konusflächen zur Bildung von Spann-Nuten (22) zu, in denen als Spanngliederreihen Schraubenfedern liegen, und zwar schwächere Schraubenfedern (23) und stärkere Schraubenfedern (24).

Zum Spannen der Vorrichtung wird Druckmittel in den Zylinderraum zwischen Kolben (4) und Zylinderwand (3) eingeführt, wodurch die Kolbenstange in der Zeichnung nach rechts gezogen und die äußersten Ringteile (19 u. 20) einander genähert werden, so daß sich auch die Wände der Spann-Nuten einander nähern und die Schraubenfedern (23, 24) nach außen in Anlage mit den Innenflächen der zu spannenden Werkstücke pressen. Dabei bildet jeweils eine Spann-Nut (22) mit der darin liegenden Schraubenfeder (23, 24) eine Spanneinrichtung. Insoweit stimmen sämtliche dargestellten Montageausführungen überein.

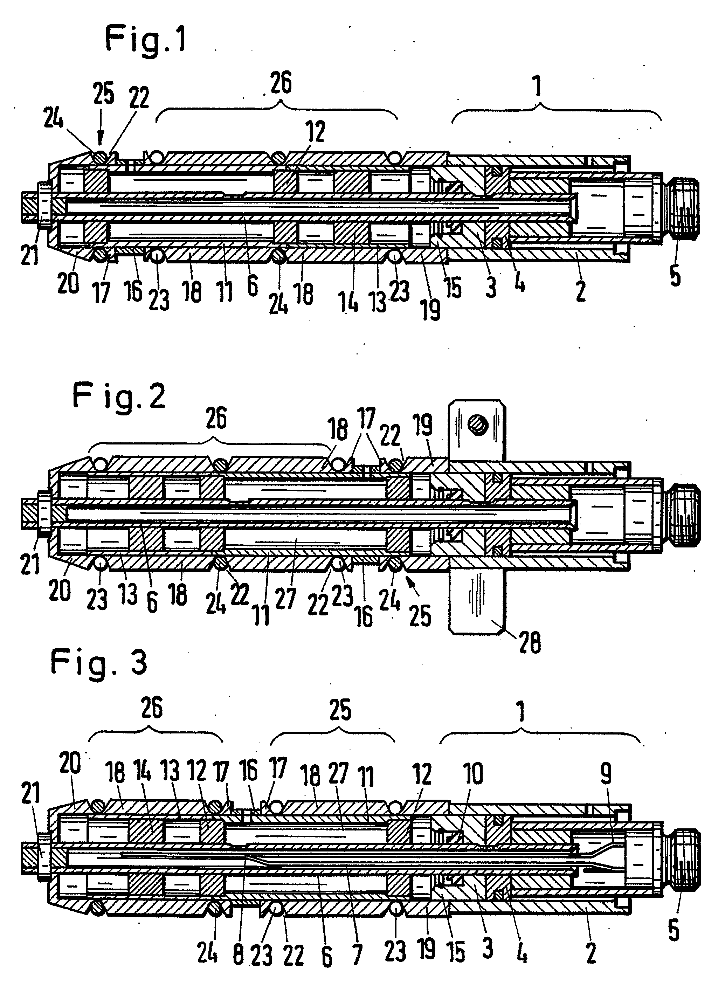

Im ersten Montagezustand, der in Fig.1 gezeigt ist, ist der Schweißbereich (16) nahe dem freien Ende der Vorrichtung angeordnet. Die erste Spanneinheit (25) umfaßt nur eine Spanneinrichtung mit starker Feder (24), während die zweite Spanneinheit (26) drei Spanneinrichtungen umfaßt, von denen die beiden äußeren mit schwachen Federn (23) und die innere mit einer starken Feder (24) bestückt ist. Der erste Haltekörper (11, 12) liegt nahe dem freien Ende der Vorrichtung, wobei sein Schweißbereich ebenfalls nahe dem freien Ende der Vorrichtung liegt. Trotzdem erreicht sein Schutzgaszuführungsraum (27) zwischen den Stirnscheiben (12) die Gaszuführungsöffnung (8), weil der Abstand zwischen der rechten Stirnscheibe (12) und dem äußersten Ringteil (20) etwas größer ist als der halbe Abstand zwischen den äußersten Ringteilen (19 u. 20) und weil die Gaszuführungsöffnung (8) in der Mitte dazwischen liegt. Die Anordnung der schwachen Federn in der Spanneinheit (26) bewirkt, daß bei anfänglich schwacher Beaufschlagung der Kolbenzylindervorrichtung zunächst das auf dieser Spanneinheit zu spannende, gerade Rohrstück mit mäßiger Kraft fixiert wird. Es besteht dann noch Gelegenheit, den mittels der Spanneinheit (25) zu spannenden Krümmer in bezug auf das Rohrstück auszurichten und die Lage der Rohrteile im Hinblick auf den Schweißbereich (16) der Vorrichtung zu kontrollieren. Danach wird die Kolbenzylindervorrichtung voll beaufschlagt und beide Werkstücke werden mit der gewünschten Kraft gespannt. Nach der Schweißung wird der Antrieb gelöst und die Federn (23, 24) ziehen sich wieder zusammen unter axialer gegenseitiger Entfernung der Ringteile (18, 19, 20), und die Vorrichtung kann von den Werkstücken wieder getrennt werden.

Im zweiten Montagezustand gemäß Fig. 2 ist die Anordnung der Haltekörperteile (11, 13) sowie der Ringteile (18) gegenüber dem Schweißbereich (16) umgedreht. Auf dem Antriebskörper (1) ist ein Anschlagflansch (28) aufgesetzt zum Festlegen und Ausrichten eines mittels der ersten Spanneinheit (25) zu spannenden Flansches, während die Spanneinheit (20) zum Spannen eines geraden Rohrstücks dient. Infolge der Anordnung einer stärkeren Feder (24) in der ersten Spanneinheit (25) und von schwächeren Federn (23) in der zweiten Spanneinheit (20) wird beim Einsetzen des Spannantriebs zunächst letztere vorgespannt, so daß vor dem endgültigen Spannen die relative Lage noch kontrolliert und der Flansch auf der ersten Spanneinheit (25) noch nachträglich ausgerichtet werden kann. Wünscht man zuerst den Flansch und anschließend das Rohrstück zu spannen, so muß in der ersten Spanneinheit (25) eine schwache Feder vorgesehen werden, während die Spanneinheit (26) ausschliesslich mit starken Federn bestückt werden darf. Obwohl der Schweißbereich (16) extrem weit vom freien Ende der Kolbenstange (6) entfernt angeordnet ist, kann er mit Schutzgas von der Zuführungsöffnung (8) her versorgt werden, weil der Abstand zwischen dem Ringteil (19) und der Gaszuführungsöffnung (8) geringer ist als der Abstand zwischen dem Ringteil (19) und dem linken Stirnflansch (12).

Während im ersten und zweiten Montagezustand der zweite Haltekörperteil (13, 14) an der dem Schweißbereich (16) fernen Seite des ersten Haltekörperteils (11, 12) angeordnet ist, ist er im dritten Montagezustand gemäß Fig. 3 dem Schweißbereich nahen Ende des ersten Haltekörperteils benachbart.

Infolgedessen liegt der Schweißbereich (16) in der Mitte zwischen den Ringteilen (19, 20), wobei es gleichgültig ist, welcher der beiden Haltekörperteile dem freien Ende der Vorrichtung näher liegt.

In diesem Montagezustand umfassen beide Spanneinheiten (25, 26) je zwei Spanneinrichtungen, von denen eine mit schwächeren und die andere mit stärkeren Schraubenfedern (23 bzw. 24) bestückt ist.

Die Vorrichtung läßt sich leicht von einem Montagezustand in den anderen überführen, indem der Verschlussteil (21) gelöst, die Haltekörper, Ringteile und Federn abgezogen und in der gewünschten, geänderten Anordnung wieder aufgesteckt werden.

## Patentansprüche

1. Vorrichtung zum Zentrieren und Spannen von miteinander zu verschweißenden Rohrwerkstücken, die beiderseits eines mit Schutzgaszuführung versehenen Schweißbereichs (16) Spanneinrichtungen (25, 26) aufweist, von denen die erste (25) mindestens eine und die zweite (26) mindestens zwei Spanngliederreihen (23, 24) umfaßt, die aus nach außen sich keilförmig öffnenden und je eine Spanngliederreihe (23, 24) enthaltenden Spann-Nuten (22) bestehen, deren Nutwände von axial relativ zueinander bewegbaren Ringteilen (17 bis 20) gebildet sind, von denen die äußersten (19, 20) über eine Zugstange (6) und einen Antriebskörper (1) lösbar miteinander verbunden sind, durch den sie entgegen einem Federkraftspeicher einander näherbar und voneinander entfernbar sind, während ein erster innerer Ringteil (17) sowie der Schweißbereich (16) fest auf einem Haltekörper (11, 13) angeordnet sind und ein zweiter innerer Ringteil (18) axial verschiebbar auf dem Haltekörper (11, 13) angeordnet ist, dadurch gekennzeichnet, daß der Haltekörper (11, 13) aus zwei zur Bildung einer fluchtenden Führungsfläche miteinander verbindbaren Haltekörperteilen (11, 13) besteht, von denen der erste (11) den Schweißbereich (16) trägt, und daß ein dritter auf die Haltekörperteile (11, 13) axial verschiebbarer Ringteil (18) sowie eine weitere Spanngliederreihe (23, 24) vorgesehen sind.

2. Vorrichtung nach Anspruch 1, dadurch gekennzeichnet, daß der Haltekörper (11) einen langgestreckten Schutzgaszuführungsraum (27) einschließt, der einerseits mit dem Schweißbereich (16) und andererseits mit einer Schutzgaszuführungsöffnung (8) in der Kolbenstange (6) in jeder Montagestellung in Verbindung steht.

3. Vorrichtung nach Anspruch 1 oder 2, dadurch gekennzeichnet, daß der erste Haltekörperteil (11), der den Schweißbereich (16) trägt, den Gaszuführungsraum (27) bildet, der mindestens etwa halb so lang ist wie der Abstand zwischen den äußersten Ringteilen (19, 20), wobei die Gaszuführungsöffnung (8) etwa in der Mitte zwischen den äußersten Ringteilen (19, 20) liegt.

4. Vorrichtung nach einem der Ansprüche 1 bis 3, dadurch gekennzeichnet, daß die Haltekörper Stirnflächen und die diesen gegenüberliegenden Flächen der mit dem Kolbenstangenende bzw. dem Antriebskörper (1) verbundenen Teile (3, 20) einen in allen Montagezuständen gleich langen Federraum zwischen sich einschließen.

5. Vorrichtung nach einem der Ansprüche 1 bis 4, dadurch gekennzeichnet, daß der Kraftfederspeicher ausschließlich von in den Spanngliederreihen (23, 24) vorgesehenen Ringfedern gebildet ist.

6. Vorrichtung nach einem der Ansprüche 1 bis 5, dadurch gekennzeichnet, daß die Federkraft von mindestens einer Spannrichtung (22, 24) stärker ist als die der anderen (22, 23).

7. Vorrichtung nach Anspruch 6, dadurch gekennzeichnet, daß die Federkonstante der Ringfedern (23, 24) unterschiedlich ist.

8. Vorrichtung nach Anspruch 6 oder 7, dadurch gekennzeichnet, daß die Spann-Nuten (22) im wesentlichen gleich geformt sind.

g. Vorrichtung nach Anspruch 6 oder 7, dadurch gekennzeichnet, daß die Spann-Nuten (22) unterschiedlichen Keilwinkel aufweisen.

10. Vorrichtung nach Anspruch 7, dadurch gekennzeichnet, daß zwei schwächere (23) und zwei stärkere Federn (24) vorgesehen sind.

11. Vorrichtung nach einem der Ansprüche 1 bis 10, dadurch gekennzeichnet, daß die Zugstange geschlossene Kühlkanäle enthält.

## Claims

1. A device for centering and clamping tubular workpieces to be welded together, which on either side of a welding zone (16) provided with a shielding gas feed has clamping means (25, 26), the first (25) of which comprises at least one row and the second (26) of which comprises at least two rows of clamping members (23, 24) formed by clamping grooves (22) which open outwards in a wedge-like manner and each of which includes one row of clamping members (23, 24), the walls of said grooves being formed by annular parts (17 to 20) movable axially relative to one another, the outermost of which annular parts (19, 20) are releasably connected together via a pull rod (6) and a drive member (1), by means of which they can be brought closer together and moved apart against a spring energy accumulator, a first inner annular part (17) and the welding zone (16) being securely arranged on a retaining member (11, 13) and a second inner annular part (18) being mounted axially displaceable on the retaining member (11, 13), characterised in that the retaining member (11, 13) includes two retaining member parts (11, 13) which can be joined together to form an aligned guide surface, the first (11) of which parts supports the welding zone (16), and in that a third annular part (18) axially displaceable on the retaining member parts (11, 13) and a further row of clamping members (23, 24) are provided.

2. A device according to Claim 1, characterised in that the retaining member (11) encloses an elongate shielding gas feed chamber (27) which, on the one hand, is in communication with the welding zone (16) and, on the other hand, with a shielding gas feed opening (8) in the piston rod (6) in each installation arrangement.

3. A device according to Claim 1 or 2, characterised in that the first retaining member part (11) which supports the welding zone (16) forms the gas feed chamber (27) which is at least approximately as half as long as the spacing between the outermost annular parts (19, 20), the gas feed opening (8) being situated approximately in the centre between the outermost annular parts (19, 20).

4. A device according to any one of Claims 1 to 3, characterised in that the retaining member end faces and the opposing surfaces of the parts (3, 20), connected with the piston rod end and the drive member (1) respectively, enclose between them a spring chamber of the same length in all the installation arrangements.

5. A device according to any one of Claims 1 to 4, characterised in that the spring store accumulator is formed exclusively by annular springs provided in the rows of clamping members (23, 24).

6. A device according to any one of Claims 1 to 5, characterised in that the spring force of at least one clamping means (22, 24) is more powerful than that of the other means (22, 23).

7. A device according to Claim 6, characterised in that the spring rate of the annular springs (23, 24) is variable.

8. A device according to Claim 6 or 7, characterised in that the clamping grooves (22) are substantially uniform in shape.

9. A device according to Claim 6 or 7, characterised in that the clamping grooves (22) have differing wedge angles.

10. A device according to Claim 7, characterised in that two relatively weak springs (23) and two relatively powerful springs (24) are provided.

11. A device according to any one of Claims 1 to 10, characterised in that the pull rod includes closed cooling passages.

## Revendications

1. Dispositif pour le centrage et le serrage de morceaux de tuyau à souder ensemble, comportant, des deux côtés d'une zone de soudage (16) munie d'une admission de gaz protecteur, des systèmes de serrage (25, 26) dont le premier (25) présente au moins une série et le second (26) au moins deux séries d'éléments de serrage (23, 24), systèmes qui sont constitués par des gorges de serrage (22) qui s'ouvrent en forme de coin vers l'extérieur, contiennent chacune une série d'éléments de serrage (23, 24) et dont les parois sont formées par des pièces annulaires (17 à 20) mobiles axialement les unes par rapport aux autres, pièces dont les plus externes (19, 20) sont raccordées l'une à l'autre de façon détachable au moyen d'une tige de traction (6) et d'un corps d'actionnement (1) par lesquels elles peuvent être rapprochées et éloignées l'une de l'autre contre l'action antagoniste d'un accumulateur de force à ressort, tandis qu'une première pièce annulaire interne (17) ainsi que la zone de soudage (16) sont disposées en position fixe sur un corps de support (11, 13) et qu'une deuxième pièce annulaire interne (18) est montée mobile axialement sur le corps de support (11, 13), caractérisé en ce que le corps de support (11, 13) est constitué par deux parties de corps de support (11, 13) qui peuvent être unies l'une à l'autre pour former une surface de guidage enlignée et dont la première (11) porte la zone de soudage (16), et en ce qu'il est prévu une troisième pièce annulaire (18) mobile axialement sur les parties de corps de support (11, 13), ainsi qu'une autre série d'éléments de serrage (23, 24).

2. Dispositif selon la revendication 1, caractérisé en ce que le corps de support (11) renferme un volume d'admission de gaz protecteur (27) de forme allongée qui, dans toute position de montage, est en communication d'une part avec la zone de soudage (16) et d'autre part avec un orifice d'admission de gaz protecteur dans la tige de piston (6).

3. Dispositif selon la revendication 1 ou 2, caractérisé en ce que la première partie de corps de support (11), qui porte la zone de soudage, forme le volume d'admission de gaz (27) qui a une longueur au moins égale à la moitié environ de la distance entre les pièces annulaires externes (19, 20), l'orifice d'admission de gaz (8) se trouvant à peu près au milieu entre les pièces annulaires externes (19, 20).

4. Dispositif selon l'une quelconque des revendications 1 à 3, caractérisé en ce que les faces frontales du corps de support et les faces qui leur sont opposées sur les éléments (3, 20) raccordés respectivement à l'extrémité de la tige de piston et au corps d'actionnement (1) délimitent entre elles une chambre de ressort qui a la même longueur dans tous les états de montage.

5. Dispositif selon l'une quelconque des revendications 1 à 4, caractérisé en ce que l'accumulateur de force à ressort est constitué exclusivement par des anneaux-ressorts prévus dans les séries d'éléments de serrage (23, 24).

6. Dispositif selon l'une quelconque des revendications 1 à 5, caractérisé en ce que la force de ressort de l'un au moins des systèmes de serrage (22, 24) est plus intense que celle de l'autre (22, 23).

7. Dispositif selon la revendication 6, caractérisé en ce que les constantes de rappel des anneaux-ressorts (23, 24) sont différentes.

8. Dispositif selon la revendication 6 ou 7, caractérisé en ce que les gorges de serrage (22) ont sensiblement la même forme.

9. Dispositif selon la revendication 6 ou 7, caractérisé en ce que les gorges de serrage (22) présentent des angles de coin différents.

10. Dispositif selon la revendication 7, caractérisé en ce qu'il est prévu deux ressorts plus faibles (23) et deux ressorts plus forts (24).

11. Dispositif selon l'une quelconque des revendications 1 à 10, caractérisé en ce que la tige de traction contient des canaux de refroidissement fermés.

EP 0 249 079 B1

Fig. 1

F ig. 2

Fig. 3